Europäisches Patentamt

European Patent Office

Office européen des brevets

(11) Publication number: **0 430 074 A1**

# EUROPEAN PATENT APPLICATION

(21) Application number: **90122320.6**

(22) Date of filing: **22.11.90**

(51) Int. Cl.⁵: **F24D 3/12, F16L 11/06, F16L 11/14, F28F 1/02**

(30) Priority: **27.11.89 IT 4175389**

(43) Date of publication of application:
**05.06.91 Bulletin 91/23**

(84) Designated Contracting States:
**AT BE CH DE ES FR GB GR LI NL SE Bulletin 1**

(71) Applicant: **Montin, Maurizio Trading under the Trading Style ELETTROMECCANICA M.M. DI MONTIN MAURIZIO**
**Via Beverara 27**
**I-35020 Pernumia (Province of Padova)(IT)**

(72) Inventor: **Montin, Maurizio Trading under the Trading Style ELETTROMECCANICA M.M. DI MONTIN MAURIZIO**
**Via Beverara 27**
**I-35020 Pernumia (Province of Padova)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Heat transmission duct particularly for heating systems embedded in a hardened transmission medium.**

(57) The present invention relates to a heat transmission duct particularly for heating systems embedded in a hardened transmission medium. The duct has a particular sectional shape composed of an internal profile constituted by two opposite vertically arranged regions (2,3) connected to two regions (4,5) with marked curvature. The external profile is instead constituted by two vertically arranged opposite regions (6,7) with very low or no curvature which are connected upwardly by a region (8) with very high curvature and downwardly by a region (9,10) with very low or no curvature. Longitudinal fins (12) extend from the vertical external regions and are suitable for improving grip on the hardened medium and heat transmission.

Fig. 1

## HEAT TRANSMISSION DUCT PARTICULARLY FOR HEATING SYSTEMS EMBEDDED IN A HARDENED TRANSMISSION MEDIUM

The present invention relates to a heat transmission duct which can be particularly used in heating systems embedded in a hardened transmission medium.

Heating systems embedded in a hardened transmission medium, known as "radiating panels", are already commonly used.

Said heating systems are constituted by ducts, generally made of cross-linked polyethylene or polypropylene with a circular or elliptical cross-section, which are fixed in a spiral or in coils on an insulation material.

Said systems are then immersed in a medium which makes the entire assembly monolithic, for example a thin concrete slab, so as to transmit heat to a floor.

These particular heating systems have considerable advantages with respect to conventional systems as regards energy saving, ambient comfort and the use of alternative energy sources.

On the other hand, "radiating panels" are affected by various functional disadvantages.

First of all, in fact, empty interspaces may form between the duct and the transmission medium during the setting and hardening process.

This entails first of all a decrease in efficiency and secondly the need to increase the feed temperature of the thermal carrier liquid, thus negatively affecting the advantages of the system in the field of alternative energy sources, which as known, are all low temperature sources (solar panels and heat pumps).

During the daily heating cycle, the duct furthermore undergoes expansion and subsequent contraction due to thermal variation.

This causes friction to occur during each cycle since adherence to the surrounding medium is lacking. In the course of time such friction can wear said duct until holes are formed, causing leaks of liquid.

Other disadvantages arise from the uneven temperature which is perceived on the floor between the regions which correspond to the passage of the pipes, which are warmer, and the intermediate regions between pipes, which are colder any excessively warm regions causing discomfort for the user.

Other disadvantages furthermore arise from the fact that the ducts currently in use, which have a circular cross section, have assembly problems since the portions arranged along curves tend to rise in the floor slab with respect to straight or less curved parts.

In order to keep them in place during the hardening of the slab it is necessary to increase the frequency of the fixing points, proportionally increasing the cost of installation and decreasing, vice versa, the thermal efficiency of the duct, or to resort to onerous treatments such as hot-bending in-situ prior to installation.

The operations for fixing the ducts to the installation surface themselves are often problematical, due to the rigidity of said ducts; this makes them difficult to insert into the seats and may inadvertently cause the ducts to exit from the seat under the thrust of the curved parts, which tend to rise.

The aim of the present invention is to provide a duct which allows to eliminate the disadvantages described above in the known art.

A consequent primary object is to provide a duct which allows to obtain an optimum temperature distribution throughout the floor.

Another important object is to provide a duct which allows greater efficiency and energy savings to heating systems.

Still another object is to provide a duct which can be assembled more easily than current ducts.

Yet another object is to provide a duct which is less subjected to wear problems when installed.

Not least object is to reduce the unwanted downward transmission of heat.

This aim, these objects and others which will become apparent hereinafter are achieved by a heat transmission duct, particularly for heating systems embedded in a hardened transmission medium, characterized in that its shape, in cross section, is composed of an internal profile, constituted by two opposite regions arranged vertically and connected by two regions with very high curvature, and an external profile, constituted by two opposite regions arranged vertically and being connected upwardly by a region with high curvature and downwardly by a region with lower or no curvature, longitudinal fins extending from said vertical external regions.

Further characteristics and advantages of the invention will become apparent from the detailed description of an embodiment thereof, illustrated only by way of non-limitative example in the accompanying drawings, wherein:

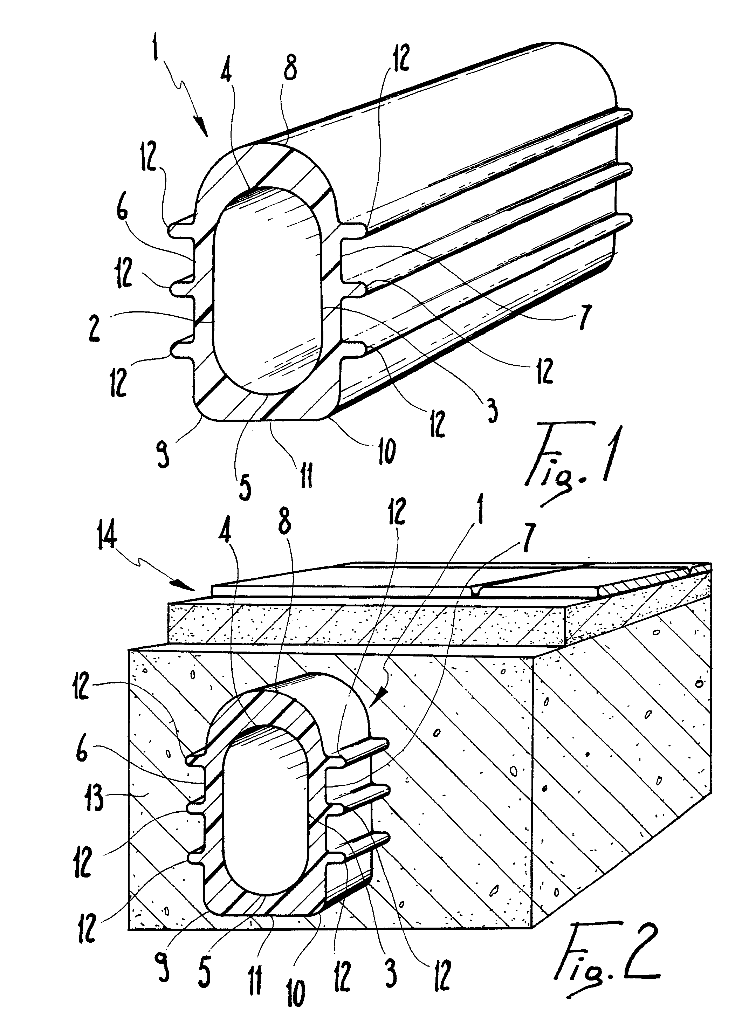

figure 1 is a perspective view of a portion of the duct according to the invention;

figure 2 is a sectional perspective view of the duct embedded in the hardened medium.

With reference to the above figures, a duct according to the invention is generally indicated by the reference numeral 1 and is produced with known methods using plastic material such as polyethylene or polypropylene.

The duct has a cross section which is the result of the combination of an internal profile and an external profile which give the walls variable thickness.

More in detail, according to the present embodiment of the invention, the internal profile is composed of two parallel and vertical straight regions, respectively 2 and 3, which are connected upwardly and downwardly by two circular regions, respectively 4 and 5.

The external profile comprises two straight regions, respectively indicated by the reference numerals 6 and 7, which are parallel to the preceding regions 2 and 3 and are therefore arranged vertically and are connected above by a circular region 8 and below by means of two circular portions 9 and 10 with a straight region 11.

Advantageously, fins 12 extend orthogonally from said straight regions 6 and 7 and can be either monolithic with the duct 1, as in the case being considered, or applied thereto by drawing, painting, electrogalvanic, electrolytic or equivalent deposition.

The fins 12 can be conveniently made of either synthetic or metallic material.

Due to the particular shape of the profiles, the thickness of the wall of the duct is approximately inversely proportional to the curvature and is therefore higher at the shorter sides of the external rectangular shape, and lower at the longer sides thereof.

Due to this reason, for example the circular region 8 has a smaller radius of curvature than the circular region 4 which corresponds thereto.

During the laying of the concrete slab 13, arranged below the region 14 which is subsequently covered or floored, small air pockets form in the upper region and in the finned region.

When the thermal carrier fluid flows, due to thermal dilation the duct tends to deform and expand in its lateral regions, which offer less resistance due to the absence of curvatures and to their lower thickness.

Due to this deformation, the finned lateral walls press strongly against the hardened medium, creating a good thermal coupling and simultaneously preventing sliding of the duct in the medium.

In the lateral regions, the duct is thinner and adhesion to the slab is maximized (due to the pressure of the water and to the deformation of the pipe), and the contact surface is furthermore very large due to the fins provided.

Again due to the deformation, the small upper air pocket instead tends to expand, hindering vertical upward heat flow.

The thicker cross-section of the wall of the duct in the upper and lower regions constitutes a further hindrance to the passage of the heat flow, which is thus preferentially directed toward the parts of the floor which are usually colder, thereby rendering its temperature more uniform.

The upward and downward diffusion of heat, which respectively causes an uneven temperature distribution and energy losses, is thus hindered.

In practice it has therefore been observed that the duct according to the invention has important advantages, with respect to those currently in use, regarding temperature distribution, efficiency and energy saving.

Downward heat flow or conduction is in fact reduced or hindered, where it entails unwanted emissions which lead to heat energy losses or in a lower thermal impedance of the rooms. Upward heat flow is also reduced or hindered, at regions where it might entail unpleasantly high floor temperatures.

Flow is instead facilitated in the lateral directions toward the colder floor regions, so as to make the temperature of the radiating floor slab as uniform as possible.

Other advantages derive from ease in assembly, since the fins allow the insertion of the pipe in the fixing support and vice versa hinder its exit.

The shape furthermore has very different moments of inertia along the two main axes of symmetry, and the minimum moment of inertia is along the horizontal axis, creating a preferential direction of curvature which is useful for preventing lifting of the more curved pipe portions.

In practice it has thus been observed that the invention has achieved the intended aim and objects.

The invention thus conceived is susceptible to numerous modifications and variations, all of which are within the scope of the inventive concept.

In practice, the materials employed, so long as compatible with the contingent use, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1.  Heat transmission duct particularly for heating systems embedded in a hardened transmission medium, characterized in that its shape in cross section is composed of an internal profile, constituted by two opposite vertically arranged regions connected by two regions with very high curvature, and an external profile, constituted by two opposite vertically arranged regions connected upwardly by a region with high curvature and downwardly by a region with lower or no curvature, longitudinal fins extending from said vertical external regions.

2. Duct according to claim 1, characterized in that said internal profile comprises two straight opposite regions arranged vertically and connected by two circular regions.

3. Duct according to claim 1, characterized in that said external profile comprises two opposite straight regions arranged vertically and being connected upwardly by a circular region and below by two circular portions with a horizontal straight region.

4. Duct according to one or more of the preceding claims, characterized in that the upper region of the internal profile has a higher degree of curvature than the corresponding region of the external profile.

5. Duct according to one or more of the preceding claims, characterized in that the thickness of its wall is substantially proportional to the curvature of the profiles and is therefore lower at the lateral regions and higher at the upper and lower regions, so as to facilitate the emission of heat toward the floor regions at lower temperature and hinder heat transmission toward the floor regions at higher temperature and downward.

6. Duct according to one or more of the preceding claims, characterized in that said fins extend longitudinally to said duct and can be monolithic therewith or applied thereon for example by drawing, painting, electrogalvanic, electrolytic or equivalent deposition.

7. Duct according to one or more of the preceding claims, characterized in that it is preferably made of synthetic or metallic material.

8. Duct according to one or more of the preceding claims, characterized in that said fins can be made of synthetic or metallic material.

Fig. 1

Fig. 2

European
Patent Office

**EUROPEAN SEARCH
REPORT**

Application Number

**EP 90 12 2320**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-C-9 354 87 (THE ROVER CO., LTD) <br> * Fig. * <br> — — — | 1 | F 24 <br> D 3/12 <br> F 16 L 11/06 <br> F 16 L 11/14 <br> F 28 F 1/02 |
| A | GB-A-4 621 86 (JOSEPH SANKEY AND SONS LTD) <br> * Fig. * <br> — — — . | 1,2 | |
| A | DE-A-2 359 446 (ENGEL) <br> * Fig. * <br> — — — | 1,2 | |
| A | DE-A-3 241 743 (ROSEL) <br> * Abstract * <br> — — — | 1 | |
| A | DE-A-3 039 958 (BUCHHOLZ) <br> * Fig. * <br> — — — — — | 1,6 | |

|  | TECHNICAL FIELDS SEARCHED (Int. Cl.5) |
|---|---|
|  | F 24 D <br> F 16 L <br> F 28 F |

The present search report has been drawn up for all claims

| Place of search | Date of completion of search | Examiner |
|---|---|---|
| The Hague | 04 March 91 | VAN GESTEL H.M. |

CATEGORY OF CITED DOCUMENTS
X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document